# EUROPEAN PATENT APPLICATION

(11) **EP 3 437 867 A1**
(43) Date of publication of application: **06.02.2019**
(21) Application number: 18187107.0
(22) Date of filing: 02.08.2018
(51) Int. Cl.: B41J 2/045, F24F 6/14, A01G 31/00

(54) **HUMIDITY CONTROLLER**

(30) Priority: 04.08.2017 GB 201712565
(71) Applicant: Airponix Ltd, London, Surrey TW10 6TS (GB)
(72) Inventor: RUGGIER, Michael, Richmond, Surrey TW10 6TS (GB); PREWER, John Russell, Richmond, Surrey TW10 6TS (GB); ROBERTSON, Barry, Richmond, Surrey TW10 6TS (GB)
(74) Representative: J A Kemp

(57) **Abstract**

The present invention relates a control system and method for supplying droplets within a space for controlling humidity. The control system comprises a droplet generator and a control unit. The droplet generator comprises at least one outlet and is configured to supply droplets to the space. The control unit is configured to control ejection of the droplets from the droplet generator to control the humidity in the space.

## Description

The present invention relates to a control system, apparatus and method. More particularly, the present invention relates to a control system, apparatus and method for controlling humidity.

The humidity in a given environment can have an impact on anything in that environment. In some circumstances, it is desirable to vary the impact of humidity in the environment by controlling the humidity. Known humidifiers can be used to alter the humidity in an environment, but they may be costly to run or may not provide control of the humidity to a required degree of accuracy.

For example, it may be important to control characteristics of an environment, such as humidity, in an environmental test chamber. Other characteristics of the environment may also be controlled and altered, such as temperature and light levels. It may be beneficial to accurately control each characteristic, including the humidity, so that tests can be carried out in a specific simulated environment. In this way, the effect of a specific characteristic, such as humidity, can be determined. For example, companies such as Conviron® and Weiss Technik® provide chambers (which can, for example, be room size) in which they are able to control temperatures between -20°C and +40°C, and to control humidity to simulate conditions around the world where variances of approximately 10% or maybe even less are required.

Known humidifiers may be used to control humidity in spaces such as within an environmental test chamber. These humidifiers may adapt the humidity of a space in a variety of different ways. Current means to increase the humidity within such environmental test chambers may include using steam, but this can be costly in terms of energy consumption. Current means may also include passing air over a large water surface which is not very practical, or may include the use of nozzles which need a certain amount of energy to generate a high pressure required across the nozzle.

It is desirable to provide a control system to accurately control humidity in an environment. The problem with known methods and apparatus for controlling an environment is providing accurate control in a practical manner without high cost.

According to one aspect of the present invention there is provided control system for controlling humidity of a space, the control system may comprise: a droplet generator for supplying droplets to the space, the droplet generator comprising at least one outlet, and the droplet generator being configured such that in use each at least one outlet ejects one droplet of liquid at a time; and a control unit configured to control ejection of the droplets from the droplet generator to control the humidity in the space.

According to another aspect a method of supplying droplets to a space to control the humidity of the space is provided, the method comprising generating droplets using a droplet generator comprising at least one outlet, wherein the generation step comprises generating one droplet of liquid at a time from each at least one outlet, and controlling the generation of the droplets using a control unit to control humidity in the space.

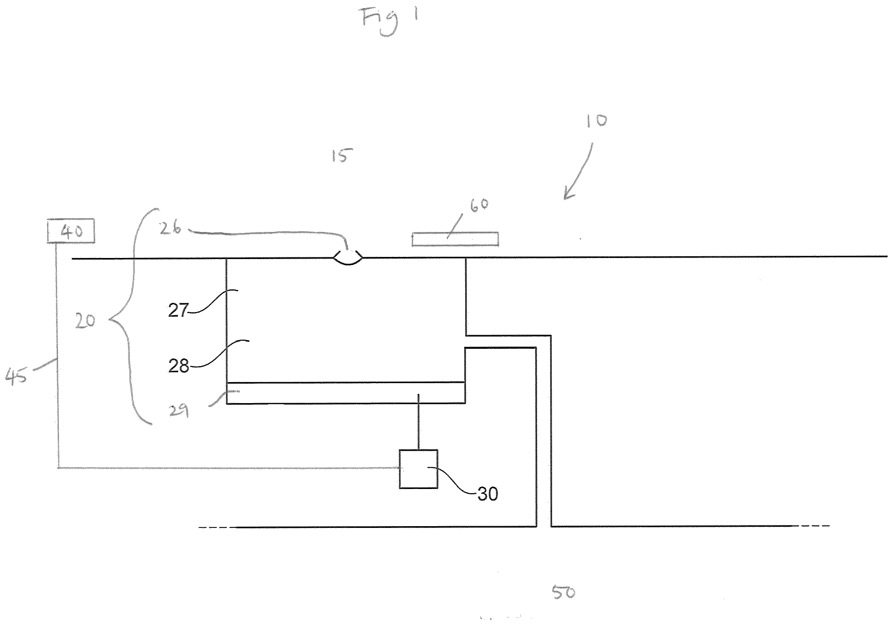

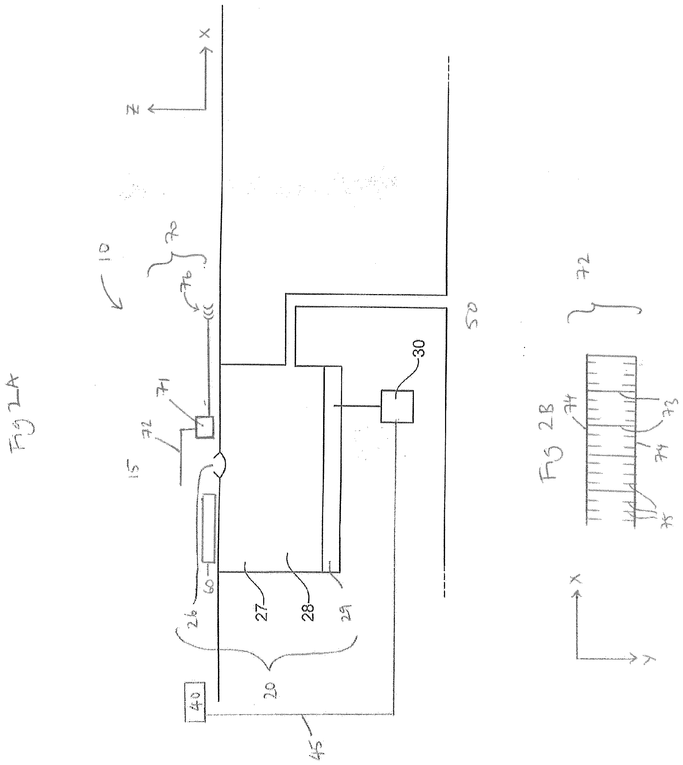

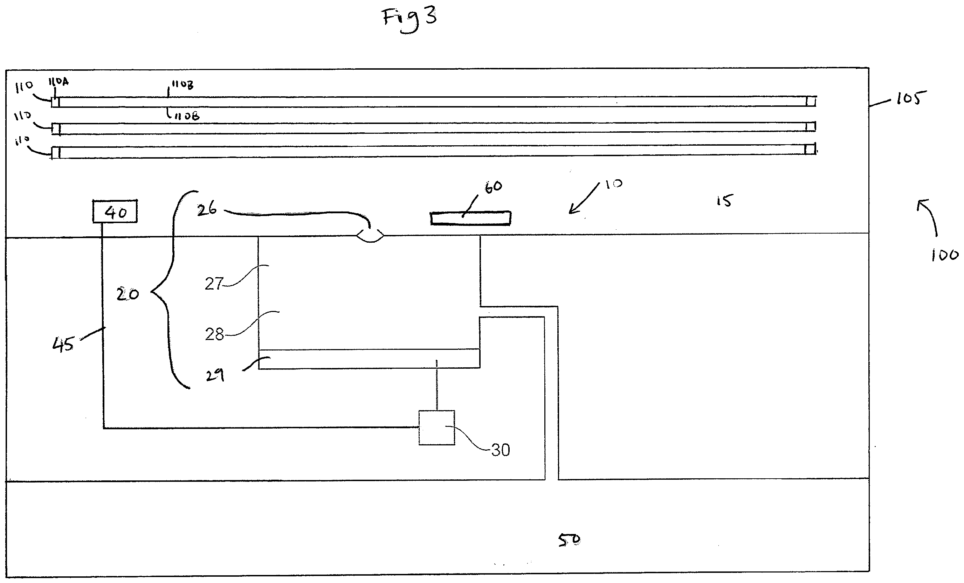

The present invention will be described with reference to exemplary embodiments and figures 1, 2A 2B, and 3. Figure 1 is a schematic view of a control system according to the present invention. Figure 2A is the control system of Figure 1 with an electrically charged device. Figure 2B is a close up of the conductive structure of Figure 2A from a different angle. Figure 3 is a schematic view of an apparatus according to the present invention. The features shown in the figures are not necessarily to scale and the size or arrangement depicted is not limiting. It will be understood that the figures includes optional features which are not essential to the invention. Furthermore, not all of the features of the control system are depicted in each of the figures and the figures may only show a few of the components relevant for a describing a particular feature.

In an embodiment, a control system is provided. The control system can be used for controlling humidity of a space. Thus, the control system can be configured to control humidity of the space. As described, in certain spaces, the humidity can be usefully controlled to vary the effect of the humidity. The control system may be used to control an environment within the space. Thus, the control system may otherwise be referred to as an environmental control system.

The control system may comprise a droplet generator and a control unit. The droplet generator is configured to supply droplets to the space. More particularly, the droplet generator is configured to supply droplets to the space in which the humidity is being controlled. The control unit is configured to control ejection of the droplets from the droplet generator to control the humidity in the space.

An example of the droplet generator is depicted in figure 1. As shown in figure 1, the droplet generator 20 comprises at least one outlet 26. The droplet generator 20 may be configured such that in use the at least one outlet 26 ejects one droplet of liquid at a time. This does not mean that every outlet 26 must eject a droplet at the same time, but means that each of the at least one outlets 26 of the droplet generator 20 is configured to output only one droplet at a time. In this way, the droplet generator 20 may be any device capable of ejecting individual droplets. Thus, the droplet generator 20 outputs separate droplets of liquid, for example in a stream of separated droplets, from each outlet 26. Known droplet generators may include known print heads used in commercial inkjet printers, e.g. using Xaar® printheads. Thus, commercial print heads could be used as a droplet generator 20 for providing droplets to the space 15.

When the droplets are generated individually by outlets 26 ejecting one droplet at a time, there are specific advantages associated with the droplets generated. The droplets emitted from the control system 10 may be referred to as a fog. The generated droplets are understood to be different to mists and/or aerosols provided by prior known humidifier systems. Mists and/or aerosols generated in the prior art generally comprise larger droplets. Advantageously, a control system 10 can more accurately control sizes of droplets by using the present droplet generator 20. For example, the control system 10 may be used to provide very small water droplets which in bulk form a dense cloud of droplets or fog. One of the main advantages of generating such droplets is that in high humidity environments, the generated droplets can stay in the air for long periods of time compared to mists/aerosols generated in previously known systems. As such the droplets will stay in the air for longer periods of time and the droplets can travel longer distances than known mists and/or aerosols.

Using such a droplet generator 20 allows control of the droplet size and thus, the droplet size can be adapted as desired. For example, the size of the droplets may be made relatively small (i.e. with a small diameter) compared to known mist and/or aerosol droplets. The relatively small droplets may be used to create what is generally known as "dry fog".

In the prior art, mists/aerosols are normally generated using a nozzle and/or spray. The nozzle and/or spray generates multiple droplets at a time which does not provide the same control over the size of each of the droplets as is provided by the droplet generator 20 of the present invention.

The control system 10 described herein provides a way of generating droplets to control humidity in a space which should be low capital and have low operating costs. The present control system 10 is also extremely reliable and accurate and should allow much tighter tolerances in humidity variations than allowed by prior known systems due to increased control over number of droplets and size of droplets used, as described in more detail below.

The space 15 may otherwise be referred to as area, territory or zone. The space 15 may be adjacent to the at least one outlet 26. Thus, the droplets may be ejected from the outlet 26 into the space 15 to control the humidity in the space 15. For example, the space may be in a room and the droplet generator 20 may be provided with an outlet 26 along a wall of the room to eject droplets into the space 15 in the room. The space 15 may contain the at least one outlet 26, such that the droplet generator 20 is provided with the outlet 26 being located in the space 15. For example, if the space 15 is a room, the outlet 26 may be provided somewhere within the room, such as in the middle of the room, to provide droplets to the space 15 to control the humidity in the space 15.

The space 15 may be partially enclosed, for example, the space 15 may be between two surfaces or walls. The space 15 may be further enclosed, for example, being defined as a space 15 within several surfaces, such as a room with one side open. The space 15 may be substantially enclosed. For example, the space 15 may be a room with walls on all sides as well as a floor and a ceiling. When the space 15 is substantially enclosed, there may still be small gaps or openings to allow the environment within the space 15 to interact with an environment outside the space 15. The space 15 being substantially enclosed may mean that the boundary of the space 15 is defined by a surface (e.g. a wall or side) for approximately 90% of the boundary or more. The space 15 being substantially enclosed may include the space 15 being entirely enclosed except for the opening of the droplet generator 20 and the opening(s) of any other control devices being used to control the environment within the space 15. The space being substantially enclosed may include the space 15 being a sealed space.

The control system may optionally comprise a sensor. The sensor 40 is depicted in figure 1. The sensor 40 may be configured to detect humidity in the space 15. In other words, the sensor 40 may capable of detecting humidity and may be located so as to detect the humidity in the space 15. The sensor 40 may be located anywhere in the space 15. The sensor 40 may have some components outside the space 15 and some components, such as sensing components, inside or at a boundary of the space 15. The sensor 40 may provide feedback to the control unit 30. The feedback may be provided by a connection, such as a wire 45 shown in figure 1, or by any other means, e.g. the information may be sent wirelessly over the internet. Thus, the wire shown in Figure 1 is optional. The control unit 30 may be configured to control the ejection of droplets based on the feedback, i.e. based on the humidity detected by the sensor 40. The humidity may thus be dynamically controlled based on the detected humidity in the space 15. For example, there may be a set value of humidity which is preferred, or a desired range. The feedback can be compared to the set value or desired range to determine the difference compared to the humidity in the space 15. Based on the determined difference, the ejection of droplets from the droplet generator 20 may be altered to adapt the humidity in the space and make it closer to the set value or desired range.

Although a sensor is shown in figure 1, it is not necessary to include a sensor. The control system 10 may not need dynamic control, i.e. the present invention may still provide beneficial humidity control if the control system 10 is simply switched on and droplets are supplied, preferably continuously. The droplets may be supplied, for example, at a predetermined size and/or rate. Furthermore, accurate humidity control may be provided by using information provided from previous tests or based on modelled environments of the space 15. For example, it may be known that in a particular space, it is necessary for the control system 10 to output a certain number of droplets per second to achieve a desired humidity. The control system 10 may function by ejecting droplets to match these predetermined numbers. Thus, although the use of a sensor may provide an improved system because it allows feedback from the space 15 to be taken into account to more accurately control humidity in the space 15, the use of the sensor is not necessary or essential for providing accurate humidity control in the space 15 using the control system 10.

The space may be within or may be part of a variety of different apparatus and environments. For larger spaces, it is likely that a more complicated system may be used, e.g. using additional outlets 26 and/or droplet generators 20, and additional sensors 40 if being used. Some applications of the above described control system are described below.

The space 15 may be within a gas turbine, such as a static gas turbine. In particular, the space may be within or part of an air feed for a gas turbine. It may be beneficial to provide such humidity control in a turbine because it can help control thermal efficiency of the turbine. In particular, cool humid air may improve efficiency of large generator sets.

The space 15 may be within a food preparation, storage and/or selling area. For example, with respect to food preparation, ingredients used in baking may soak up moisture in a humid environment or may become dried out when humidity is lower. This may affect the outcome of baked goods. Thus, it may be beneficial to provide humidity control using the present control system 10 in parts of a preparation area such as in certain parts of a bakery, or areas used for baking. The control system 10 may be used to control humidity in a space 15 in a bakery proving room and/or oven, and/or in a bakery retarder prover. The humidity of an area may affect the shelf life of food products. Therefore, additionally or alternatively, it may be beneficial to provide humidity control using the control system 10 in food storage areas and/or food selling areas to help keep food products healthy and wholesome for as long as possible. Thus, the space may be a food storage area and/or food selling area. One example, is in a covered market selling fresh foodstuffs. Thus, the space 15 may be within the covered market, e.g. between the floor and ceiling and may be specifically provided around a stall being used to store and sell food products.

The space 15 may be within a printing works, e.g. a printing area or room. Providing humidity control may be beneficial in controlling how long it takes for ink to dry. For example, increasing the humidity may prevent the ink from drying too quickly. Humidity control may be provided in other environments to control, reduce or prevent the drying of liquids such as inks and paints. For example, the space 15 may be within a car factory which may beneficially slow the evaporation rates of wet paint. In a car factory, the humidity control may have the added benefit of providing a form of cooling.

The space 15 may be a textile production space, i.e. the space may be within an area used for textile production. For example, the space 15 may be within a textile factory, or a particular room or zone of a textile factory. Providing humidity control in such an area is beneficial to help reduce static electricity build up on fabrics. Humidity control may be provided in other environments to reduce static electricity build up. For example, the space 15 may be within a data centre, such as a room or facility used to house computer systems and associated components. In a data centre, as well as preventing or reducing static charge build up, controlling the humidity may prevent or reduce overheating.

The space 15 may be an area in which wooden objects (e.g. pieces of wood, timber, and/or wooden furniture) are prepared and/or stored. Changes in humidity can affect wood. For example, if the wood is too dry, it can shrink and/or warp and/or crack. Thus, it may be beneficial to control the humidity using the control system 10 in an area in which wood/wooden objects are prepared, e.g. where they are being worked on, carved or cut up. Additionally or alternatively it may be beneficial to control the humidity using the control system 10 in an area where the wood/wooden objects are stored, where the humidity may affect and possibly damage the wood/wooden objects over time. This includes the storage of wooden objects which are essentially in use. For example, the space 15 may be an area used for barrel and cask storage which are made of wood. In particular, it is beneficial to prevent the wood used for barrels and casks from cracking or warping over time because then there may be a leak of liquid stored within the barrel or cask. This would lead to waste. Other materials may also warp and crack due to fluctuations of humidity over time. Humidity control may be provided in other environments to help prevent detrimental changes in the material such as shrinking, cracking and warping. For example, museums often contain important artefacts which should be protected over time. In particular, many natural materials may be on display which may be affected by fluctuations in humidity. Therefore, the control system may provide droplets to a space 15 housing artefacts made from natural materials, such as a room or area in a museum.

The control system 10 can be used for providing humidification and cooling in an office environment. For example, the humidity may be controlled throughout multiple different rooms and/or floors of an office, or the space 15 may be a single office room in which the humidity can be more easily controlled. For an office environment, the humidity may be beneficially controlled to provide a preferred or comfortable environment for the users of the office.

As already described, it may be important to control humidity within a test chamber, such as an environmental test chamber or room, such as those provided by companies such as Conviron® and Weiss Technik®. The present control system 10 may be provided in such environments to accurately control humidity. In other words, the space 15 may be within such a test chamber, or may be a room in which such tests are carried out. The present control system 10 may reduce the amount of energy needed to humidify the space 15 as desired which would reduce overall costs compared to other known systems.

The space 15 may be an area used or adapted to cultivate and/or grow plants, e.g. in a greenhouse, or an area used to sell plants, e.g. in a covered market. The space 15 may be an area used to cultivate and/or grow plants using geoponics or hydroponics. Thus, the space 15 may be used to cultivate and/or grow plants, wherein the plants are cultivated and/or grown using soil or aggregate medium, or are cultivated and/or grown in water. In other words, the space may be part of a geoponic propagator or a hydroponic propagator. It may be beneficial to humidify a space used to cultivate and/or grow plants using the control system 10 because this has the advantage of cooling the space and causing leaf stomata to open. The opening of the leaf stomata can enhance growth related CO₂ uptake and enhance oxygen releasing processes. It may be beneficial to control the humidity in an space being used to sell plants because higher humidities can be used to extend the shelf life of the plants being sold.

The space 15 may be an area used or adapted to propagate at least one pathogen or fungus. Thus, the space 15 may be an area in which the pathogen or fungus can be bred or propagated within.

The space 15 may be a space used to cultivate and/or grow plants but which is not an aeroponic propagator (in which plants are cultivated and/or grown in air). In other words, the space may not be and/or may not be within an aeroponic propagator. Plants can be cultivated and/or grown in air (e.g. in an aeroponic propagator), in water (e.g. in a hydroponic propagator), or in more traditional mediums such as soil or an aggregate medium (e.g. in a geoponic propagator). The space may not be used specifically as part of an environment in a propagator in which plants are cultivated and/or grown in air. The space may not be a space used to cultivate and/or grow plants using aeroponics. Additionally, contrary to the example relating to the plants above, the space may not be a space specifically adapted to cultivate and/or grow plants, even those cultivated and/or grown using hydroponics or geoponics.

The control system 10 may have multiple outlets 26, i.e. the control system 10 may comprise plural separate outlets 26, each of which are configured to provide droplets of liquid one droplet at a time. Having multiple outlets 26 may mean that one droplet generator 20 of the control system 10 has multiple outlets 26, or that the control system 10 comprises multiple droplet generators 20, each with one outlet 26, or that the control system 10 comprises multiple droplet generators 20, the droplet generators 20 each having at least one outlet 26, i.e. the droplet generators 20 may be a combination of at least one droplet generator 20 having only one outlet 26 and at least one droplet generator 20 having multiple outlets 26.

Providing multiple outlets 26 can be beneficial in providing a large number of droplets because multiple outlets 26 means that the number of droplets provided at any one time can be increased. This would improve the speed of generation of the droplets. Thus, the number of droplets may be controlled depending on how each of the plural outlets 26 are controlled. For example, instead of at least one outlet 26, there may be at least approximately 100 outlets 26, or at least approximately 300 outlets 26 or at least approximately 1000 outlets 26 or even more. As described above, this may be the number of outlets provided in a control system 10 by a single droplet generator 20 or multiple droplet generators 20. Thus, at least one single droplet generator 20 may comprise more that one outlet, and preferably, the droplet generator comprises approximately 100 outlets or more, and more preferably, the droplet generator comprises approximately 1,000 outlets, and more preferably, the droplet generator comprises more than 1,000 outlets. In the example below, the droplet generator comprises 1,280 outlets and the droplet generator 20 could comprise even more outlets. Multiple droplet generators with varying numbers of outlets 26 may be provided.

The number of outlets 26 may be specifically chosen depending on desired characteristics of the space 15, e.g. a predetermined temperature or humidity and/or other characteristics of the space 15 such as size, and external factors such as wind/breeze.

The plural outlets 26 may be provided in an array. In other words, the outlets 26 may be provided in some sort of matrix formation. Providing the droplets in an array allows the formation of the droplets to be controlled. This also allows the control system 10 to have the capacity to generate the droplets closer to each other, e.g. to create a dense fog. For example, the multiple outlets may be arranged in a desired pattern, or with a specific spacing, to aid a formation of droplets (e.g. a fog) having a preferred density. The density may affect the movement of the formation of droplets and the interaction of the droplets with anything in the space 15, such that controlling these characteristics is beneficial. The array may or may not be linearly organised and may or may not be arranged in a regular pattern formation. The array may be arranged to provide the formation of droplets in such a way that air and/or the formation of droplets is moved in spiralling vortices which may focus movement of the droplets. This may be similar to the way vortex cannons function. This may be useful as a way to increase the distance the formation of droplets travels and to improve penetration of the droplets in areas with limited volume.

The droplet generator 20 (comprising any suitable number of outlets) may be configured to eject approximately 1000 droplets per second from each at least one outlet or preferably approximately at least 10,000 droplets per second from each at least one outlet, or more preferably approximately at least 100,000 droplets per second from each at least one outlet. It may be possible and preferable to eject many more than this, for example hundreds of thousands, and millions or even tens or hundreds of millions. The number of droplets ejected by each of the outlets 26 per second may be controlled or varied as desired.

As described above, a single droplet generator 20 may have more than 1,000 outlets. For example, a known printhead which may be used as a droplet generator is a 1201 Xaar® printhead, which has 1,280 outlets. Other printheads/droplet generators may be used to provide a similar number of outlets or even more. The outlets may be arranged in an array, for example, the 1201 Xaar® printhead has 4 rows of 320 outlets. As described above, the droplet generator may eject 1000 droplets a second or even more. In the 1201 Xaar® printhead, each outlet can eject 125,000 droplets per second. Therefore, if the droplet generator is the 1201 Xaar® printhead and is run at its maximum droplet ejection rate of 125, 000 droplets per second, then the control system 10 would provide 160 million droplets per second. Other types of printhead/droplet generator can be used with different values. However, this example provides an indication of the numbers of droplets which may be provided to the space 15. Even if the droplet generator is run at a lower speed, for example, at 30,000 droplets per second, this would still generate over 38 million droplets per second. Running the droplet generator at lower speeds may still provide the desired number of droplets at a lower speed, thus will likely reduce power consumption and can increase cost efficiency. At least the possible number of droplets per second and number of outlets per droplet generator 20 are likely to increase significantly over time as technology is developed.

It may be advantageous to eject droplets having specific sizes. The droplet generator 20 may be configured to eject droplets having a diameter of less than or equal to approximately 40 µm, or preferably less than or equal to approximately 30 µm, or preferably less than or equal to approximately 25 µm, or more preferably less than or equal to approximately 20 µm. It is preferable to use droplets below these values to prevent the droplets becoming too heavy and "dropping" out of the formation of droplets. The droplets may be as small as approximately 0.5 µm, or even approximately 0.1 µm. Thus, the droplets may have diameters in the range of approximately 0.1 µm to approximately 40 µm, or preferably from approximately 0.5 µm to approximately 30 µm, or more preferably from approximately 0.5 µm to approximately 20 µm. Assuming that the droplets are spherical, the droplet size may also be considered by volume, with the droplets having a volume of approximately 5.2x10⁻²² m³ (0.00000052 picolitres) to 3.4x10⁻¹⁴ m³ (34 picolitres), or preferably approximately 6.5x10⁻²⁰ m³ (0.000065 picolitres) to 1.4x10⁻¹⁴ m³ (14 picolitres), or more preferably from approximately 6.5x10⁻²⁰ m³ (0.000065 picolitres) to 4.2x10⁻¹⁵ m³ (4.2 picolitres). The possible droplet size is likely to decrease significantly over time as technology is developed.

The minimum size droplets that can be used may depend on the reliability and economic viability of the technology used to generate the droplets. The reduced diameter can be beneficial in more efficiently providing the formation of droplets to the space 15. For example, it may be preferably to make the droplets very small (e.g. with a diameter of less than or equal to approximately 30 µm, or more preferably 20 µm, or even as small as 0.1 µm or 0.5 µm). It is preferable to use droplets below these values to avoid the droplets becoming too heavy. It is beneficial to have the droplets as small as this so as to defy gravity and stay afloat for long distances and time. Using such small droplets can allow the formation of droplets to be used to create high humidity in the space 15.

The control system 10 may generate droplets with an average particle size (i.e. droplet diameter) of less than or equal to approximately 25 µm or less, or preferably with an average particle size of less than or equal to approximately 5 µm.

In an embodiment, the droplet generator 20 may comprise a piezoelectric actuator 29. An example of such a piezoelectric actuator is depicted in figure 1. The use of piezoelectric actuators are known in other fields, such as in inkjet printers, and have the advantages that they are commercially available, can be used to generate droplets at a high frequency, have a high degree of accuracy (i.e. control) and efficiency, and are reliable. Additionally, the accuracy and line-up of holes is extremely important for printing, but the tolerances are not as high for other applications, e.g. for humidity control, such that recycled or rejected piezoelectric actuators (i.e. piezoelectric or other appropriate printheads) may be used which provide enough accuracy for controlling humidity in the space 15. The accurate control of droplet size is not possible using prior known humidifiers, using for example sprays/nozzles to generate mists/aerosols, because multiple, possibly large numbers of, droplets are generated at the same time. The individual generation of droplets using a piezoelectric actuator 29 allows accurate control the droplet size which is particularly beneficial compared to known humidifier systems. The droplet generator 20 may comprise commercially available print heads (for example to use instead of the system shown in figure 1). Commercially available print heads are more reliable and at less cost compared to conventional spray nozzles used in humidifier systems. The reduced cost may be both in terms of capital cost of each print head unit (versus conventional nozzles) and operational cost as the print heads do not require any significant pressure drop (which is required for conventional nozzles) used in known humidifier systems.

The piezoelectric actuator 29 may be configured to control the ejection of droplets from the at least one outlet 26. The piezoelectric actuator 29 may comprise a component made from piezoelectric material. The control system 10 may comprise the control unit 30. The control unit 30 may be configured to control the application of an electrical current to the piezoelectric actuator 29 such that the piezoelectric material changes shape. The application of an electrical current to the piezoelectric material may cause the piezoelectric material to change shape, most likely to expand rapidly which changes the pressure inside the cavity 27 and which may cause an individual droplet of liquid 28 to be ejected from the at least one outlet 26.

The droplet generator 20 may comprise at least one cavity 27 which retains liquid 28 as depicted in Figure 1. The liquid 28 used by the droplet generator 20 to generate droplets may be any liquid selected as appropriate for controlling the humidity in the space 15. The cavity 27 may have a single outlet 26 or multiple outlets. The outlet 26 allows the liquid 28 to be ejected from the cavity 27. The piezoelectric actuator 29 may be formed such that a change of shape of the piezoelectric material alters the volume confined by the cavity 27. For example, the piezoelectric material may form at least a part of a wall of the cavity 27, or may be situated in the cavity 27 (in the liquid 28, when in use), or may be formed in a wall of the cavity 27 wherein the wall is capable of deforming in response to a change of shape of the piezoelectric material.

As depicted in figure 1, the control system 10 may comprise a reservoir 50 which can be used to retain the liquid 28. The liquid may be used by the control system 10 to generate the droplets. The location of the reservoir 50 may be selected depending on the structure of the control system 10 and how the reservoir 50 is used to supply liquid 28 to the cavity 27. The reservoir 50 may be part of the droplet generator 20 or the control system 10 more generally. However, the reservoir 50 could be external to the control system 10 (not shown) and may supply liquid 28 to the control system 10 in order to generate the droplets, i.e. the reservoir 50 may be in fluidic communication with the control system 10. The reservoir 50 may therefore, be used to provide liquid 28 to the at least one cavity 27. The reservoir 50 may be used to provide liquid 28 to multiple cavities 27, e.g. may be in fluidic communication with multiple droplet generators 20. In an alternative example, the reservoir 50 may be understood to mean the cavity 27 within the droplet generator 20 as this cavity 27 is capable of holding and storing the liquid 28.

Alternative methods of controlling the droplet generator 20 may also be provided. For example, thermal excitation may be used to move droplets of liquid 28 from the cavity 27 (not depicted). This may comprise the use of at least one heater in a chamber in the droplet generator 20. A control unit similar to the control unit 30 used with the piezoelectric actuator 29 may be provided. The control unit may be used to control a current being passed through the heater which causes rapid vaporization of liquid in the chamber which forms a bubble. The bubble leads to an increase in pressure in a corresponding cavity of which causes a droplet of liquid to be ejected from the droplet generator 20.

It is understood that different types of ejection unit might be used i.e. the piezoelectric actuator 29 may be replaced, for example, using a thermal excitement unit as described above, or with other types of actuators or units. For example, the piezoelectric actuator 29 may be replaced with a system using thermal jet printer technology, an actuator comprising magneto-restrictive material, an actuator comprising an electromagnet (e.g. an electromagnetic coil), a unit using resistive heating, and/or a unit using deformation and/or a response to voltage (e.g. any system which makes use of a voltage) etc.. Many known single or multiple commercially available units may be used which provide an individual drop of liquid at a time. For example, a droplet generator as described in WO 2010/055344 A1 could be adapted for use in the present control system 10.

The droplets may be allowed to travel through the space 15 passively e.g. by gravity or diffusion, and/or actively e.g. by a mechanical blower. A blowing device 60 is depicted in figure 1. The blowing device 60 may be a simple motorised fan, or it may be a more complicated system. The blowing device 60 may be used to control the speed of the droplets and/or their direction. The blowing device 60 may be controlled to have a variable effect, for example, the blowing device may have variable intensity and/or direction to allow more specific control over the droplets. Ideally, for example, the droplets within the space 15 will travel at a speed of approximately 1 m/s to 1.5 m/s, or preferably approximately 1.3 m/s. The droplets being moved at this speed means that they are able to respond much more quickly, for example in response to feedback from at least one sensor 40. It is noted that these speeds are preferable but the droplets may be effectively used at lower or higher speeds also.

The control system 10 may be configured to electrically charge the droplets. There have been barriers in the past to the use of charging droplets for humidification, including high capital and operating costs.

Using the control system 10 as in the present invention has the advantage that the charge can be applied to the droplets in a uniform way. By electrically charging the droplets, the droplets generally repel one another, so tendency for droplets to aggregate and become mist droplets is reduced or prevented. As previously described, smaller droplets may be capable of travelling further, for example, when compared to larger mist droplets. Thus charged droplets may travel relatively long distances in a higher humidity. Additionally, charging the droplets greatly enhances the potential fire distinguishing performance of the droplets which is very useful as a safety mechanism in certain emergency scenarios, such as if lightning strikes the space 15/control system 10. The charged droplets may even be used to suppress oil fires, for example, the control system 10 may reduce the humidity in the space 15 and then flood the space 15 with droplets to suppress the fire. Additionally, electrically charging the droplets alters the surface tension of the droplets, which can alter the evaporation rate of the droplets e.g. to slow it down or speed it up as desired. The evaporation rate may be modified or changed according to the size of the droplets. Use of charged droplets is described in "Charge induced stability of water droplets in sub-saturated environments" by J. K. Nielsen et al. which is hereby incorporated by reference in its entirety.

The charge may be supplied in a number of ways. The control system 10 may comprise at least one electrically charged device 70 configured to supply a charge to the droplets. The electrically charged device 70 may comprise at least one transformer 71, preferably at least one small low-cost high voltage transformer. The transformer 71 may be connected to electrically conductive components (e.g. rods or meshes as described below). The electrically conductive components may be any shape. An example of a control system comprising the electrically charged device 70 configured to electrically charge the droplets is depicted in figure 2A.

The control system 10 may supply droplets to the space 15 containing the electrically charged device. The conductive structure 72 may be positioned with respect to the outlet 26 such that the droplets exiting the outlet 26 pass through the conductive structure 72 as depicted in figure 2A. In an example, at least one insulator 76 may be provided with the electrically charged device in order to maintain the charge in the space 15, possibly to keep the space 15 safe for use.

In this example, the electrically conductive components comprise a conductive structure 72 as depicted in figure 2A. Figure 2A shows the side of an electrically charged device 70 in a plane in the X and Z axes. The conductive structure can be seen in figure 2B, which is depicted in a plane in the X and Y axes, which is perpendicular to the plane in figure 2A. In other words, figure 2A may be considered as a side view of the conductive structure 72 and figure 2B may be considered as a front (or back) view of the conductive structure 72. The axes shown in figures 2A and 2B are for descriptive purposes only and the control system 10 may be oriented in a variety of ways, and the conductive structure 72 may be oriented with respect to the other components of the control system 10 in a variety of different ways which may depend on the configuration of the conductive structure.

The conductive structure 72 may include at least one metal rod 74 (which may instead be a metal rope, or any conductive rod or rope). Additionally, the conductive structure 72 may comprise links 73 between two metal rods 74, as depicted in Figure 2B. The links 73 may be metal or carbon fibre strands connected to at least two metal rods 74. Additionally or alternatively, fibres such as fibre 75 may be provided along the length of at least one metal rod 74. These fibres 75 may be shorter than the links, but may also be formed by metal or carbon fibre strands. Each of the fibres 75 may only be connected to one metal rod 74. These links 73 and fibres 75 are used to increase the available surface area of the conductive structure to more efficiently electrically charge the droplets of droplets as they pass through the conductive structure 72. The conductive structure 72 may be in a different form, for example, the conducive structure may be a mesh (not shown).

The control system 10 may be configured to pass the droplets through the electrically charged device 70 to alter the electrical charge of the droplets. Thus, the control system 10 may pass the droplets through the conductive structure 72 depicted in figure 2A, (or through another form of conductive structure). Multiple electrically charged devices may be used. For example, the electrically charged devices may be provided at various different locations throughout the space 15. This is beneficial because it means that the electrically charged devices 70 can supply an electrical charge to droplets located in different areas of the space 15.

In an example, multiple electrically charged devices 70 may be provided and the control system 10 may be configured to pass the droplets through the electrically charged devices 70 successively. This may mean that the control system 10 is arranged to pass the droplets though all of the electrically charged devices 70, and/or that the control system 10 is configured to pass the droplets through multiple electrically charged devices 70 one after the other. This allows the charge to be changed, for example increased, as the droplets passes through each of the electrically charged devices 70.

When a droplets is charged at a single location, the charge may decrease as the droplet moves through the space 15. However, when multiple electrically charged devices 70 are provided as in some of the examples above, this may be advantageous because the charge of the droplets can be effectively controlled (e.g. increased) as the droplets pass through each electrically charged device 70. Thus, the droplets may be provided with a more consistent charge such that the same charge reaches throughout the space 15. In other words, using multiple electrically charged devices 70, ideally arranged in a preferred arrangement, can provide more uniformly charged droplets to the space 15.

As described, the control system 10 may be configured to electrically charge the droplets. In an example, the droplet generator 20 itself may be configured to charge the droplets during normal operation. For example, the droplet generator 20 may comprise some form of conductive structure, which may be in any suitable form, to add electrical charge to the droplets. The droplet generator 20 may be connected to, or may comprise, the conductive structure 72 described above. This may be in addition to, or as an alternative to, the use of the electrically charged device 70 described above.

The liquid used to form the droplets may comprise water.

The liquid may comprise ozone. Using liquid comprising ozone may be advantageous for sterilizing the space 15, and any components or units in the space 15. Providing a fog with droplets comprising ozone is particularly useful because the liquid droplets can reach hard to reach areas, i.e. all of the nooks and crannies, which allows for effective sterilisation. Ozone may be used in the liquid to sterilize the space 15 over time. Ozone may be used periodically, e.g. before a particular use of the space 15 to ensure that the space 15 is clean, sterile and ready to use.

Additionally or alternatively, the liquid may comprise at least one nutrient, i.e. one nutrient or several nutrients. Using liquid comprising at least one nutrient may be advantageous in effectively providing nutrients to any life form provided in the space 15. The at least one nutrient may be used to provide a specific nutrient solution to the space 15. The at least one nutrient may be provided in combination with the ozone.

Additionally or alternatively, the liquid may comprise at least one bacteria, virus or fungus or a combination of at least one bacteria, virus and/or fungus. For example, the fungus may be arbuscular mycorrhizal fungi (AMF). Using liquid comprising at least one bacteria, virus or fungus may be useful to propagate the at least one bacteria, virus or fungus throughout the space 15. This may increase yield of the at least one bacteria, virus or fungus in the space 15.

Additionally or alternatively, the liquid may comprise at least one pathogen. Using liquid comprising at least one pathogen may be useful to propagate the at least one pathogen throughout the space 15. The pathogen may be provided in combination with the other options described, e.g. in addition to at least one bacteria, virus and/of fungus.

Additionally or alternatively, the liquid may comprise at least one microorganism. For example, the at least one microorganism may be nitrogen fixing bacteria. Using liquid comprising at least one microorganism may be useful to propagate the at least one microorganism throughout the space 15. The microorganism may be provided in combination with the other options described, e.g. in addition to at least one bacteria, virus, fungus and/or pathogen. The microorganism may optionally be a bacteria, virus or fungus. Additionally or alternatively, the microorganism may be a pathogen. The microorganism may otherwise be referred to as a microbial composition.

The liquid may comprise a combination of any or all of the above described options. Thus, the liquid may comprise a combination of at least one nutrient, bacteria, virus, fungus, pathogen and/or microorganism, and may optionally include ozone. The liquid may comprise any of the above described options with a liquid other than water.

An apparatus may be provided wherein the apparatus comprises the control system 10 as described in any of the above variations. An example of such an apparatus 100 is shown in figure 3. Figure 3 shows an apparatus 100 comprising the control system 10 described in relation to claim 1. The apparatus may additionally or alternatively be provided with features shown and described in relation to figure 2.

The apparatus 100 may comprise the space 15. The space 15 may be substantially enclosed within the apparatus 100. For example, the apparatus 100 may comprise a housing 105 which encloses the space 15 into which droplets are ejected. The space 15 may be entirely enclosed within the apparatus 100 except for the opening of the droplet generator 20 and the opening(s) of any other control devices being used to control the environment within the space 15. More specifically, the space 15 may be entirely enclosed within the housing 105. The housing 105 may be made of a any appropriate material and may be any appropriate shape. Optionally, the housing 105 may additionally substantially enclose at least part of the control system 10 and/or the reservoir 50 as shown in figure 3.

The space 15 within the apparatus may be of any appropriate size. For example only, the space 15 within the apparatus may be between approximately 10 litre capacity to 10,000 litre capacity. Preferably, the space 15 may be approximately 100 litre capacity.

The apparatus 100 may comprise at least one removable unit 110. The removable unit 110 may be positioned with the space 15. Figure 3 depicts three removable units 10. However, different numbers of removable unit 110 may be provided, e.g. one, or two, or more than three. The at least one removable unit 110 may provide a structure on which life forms can be grown or propagated. For example, the removable unit 110 may be in the form of a frame 110A used to support a mesh 110B. The removable unit 110 may be in any appropriate shape. The frame 110A may provide a rigid support for the mesh 110B. A life form may be grown on the mesh 110B. The removable unit 110 comprising the frame 110A and the mesh 110B may be useful in providing a structure which allows movement of droplets between the removable units 110. It is advantageous for the units 110 to be removable so that they can be removed from the apparatus 100 for cleaning or harvesting and then reused. The units 110 being removable means that they can positioned within the apparatus or attached by a mechanism which allows the removable units 110 to be attached and detached without causing irreparable damage, e.g. using Velcro.

The apparatus may be useful for using the control system 10 in such a way that conditions can be maintained within the space 15. This can promote the rapid growth of various life forms, such as plants, crops, bacteria, pathogens and/or fungus. The apparatus 100 may be configured to propagate at least one pathogen or fungus. For example, the apparatus 100 can be used to promote the growth of arbuscular mycorrhizal fungi (AMF). The space 15 within the apparatus 100 may be kept sterile, for example, by using ozone in the liquid as described above. The apparatus 100 may comprise at least one removable unit 110 as described above. More specifically, the at least one removable unit 110 may comprise moisture-resistant frames over which surgical mesh is stretched. Thus the removable units 110 may be surgical mesh-faced panels. The at least one removable unit 110 may be spaced to allow the movement of aqueous fog droplets between them to maintain high humidity levels, and desired sterility across the removable units 110 (e.g. AMF-benign sterility if the apparatus 100 is used to promote growth of AMF). The removable units 110 can be removed from the apparatus 100 so that any life forms growing on the units (e.g. AMF) can be removed from the removable unit 110 once it is ready for harvesting. This is similar in principle to the way beehives contain removable cells which carry honey. A method of supplying droplets to a space 15 to control the humidity in the space 15 is provided. The method may be in accordance with the above control system 10 and/or the above apparatus 100, including or incorporating any of the above described variations and examples. Thus, the method of supplying droplets to control humidity in the space 15 may use any of the above described systems or apparatus.

The method may comprise generating droplets using a droplet generator 20 comprising at least one outlet 26, wherein the generation step comprises generating one droplet of liquid at a time from each at least one outlet 26. The method may comprise controlling the generation of the droplets using a control unit to control humidity in the space 15. Thus it is understood that the method may generate droplets as described above (for example, having the preferred droplet sizes, etc.).

The method may be used in any of the spaces described above. The method may be used in a space which is within or may be part of a variety of different apparatus and environments. For example, as described above in more detail above, the space 15 may be within a turbine and/or a food preparation, storage and/or selling area, and/or within a printing works and/or a car factory, and/or a textile production space, and/or a data centre, and/or an area in which wooden objects (e.g. pieces of wood, timber, and/or wooden furniture) are prepared and/or stored, and/or a space housing artefacts, e.g. artefacts made from natural materials, and/or an office environment, and/or a test chamber, and/or an area used to cultivate and/or grow plants e.g. using hydroponics or geoponics, e.g. in a greenhouse, or an area used to sell plants, e.g. in a covered market. As described above, the space may not be and/or may not be within an aeroponic propagator. In other words, the space may not be within a space specifically adapted to cultivate and/or grow plants using aeroponics. Further, the space may not be and/or may not be within a space specifically adapted to cultivate and/or grow plants, even those grown using hydroponics or geoponics.

It is noted that some, and not all, of the optional and even preferable features may be used in conjunction with each other. It is not necessary to include all the features depicted in the figures and only some may be included.

## Claims

1. A control system for controlling humidity of a space, the control system comprising:
a droplet generator for supplying droplets to the space, the droplet generator comprising at least one outlet, and the droplet generator being configured such that in use each at least one outlet ejects one droplet of liquid at a time; and
a control unit configured to control ejection of the droplets from the droplet generator to control the humidity in the space.

2. The control system of claim 1, further comprising at least one sensor configured to detect humidity in the space, and wherein the control unit is configured to control the ejection of droplets based on the detected humidity.

3. The control system of either of claims 1 or 2, wherein the space is adjacent to and/or contains the at least one outlet.

4. The control system of any one of the previous claims, wherein the space is not within an aeroponic propagator.

5. The control system of any one of the previous claims, wherein there are multiple outlets, and the outlets are arranged in an array, and/or wherein the droplet generator comprises a piezoelectric actuator which is configured to control the ejection of droplets from the at least one outlet.

6. The control system of any one of the previous claims, wherein the droplet generator is configured to eject:
(a) droplets having a diameter in the range of approximately 0.1 µm to approximately 40 µm, or preferably from approximately 0.5 µm to approximately 30 µm, or more preferably from approximately 0.5 µm to approximately 20 µm; and/or
(b) approximately at least 1,000 droplets per second from each at least one outlet, or preferably approximately at least 10,000 droplets per second from each at least one outlet, or more preferably approximately at least 100,000 droplets per second from each at least one outlet.

7. The control system of any one of the previous claims, wherein the droplet generator comprises more that one outlet, and preferably, the droplet generator comprises approximately 100 outlets or more, and more preferably, the droplet generator comprises approximately 1,000 outlets, and more preferably, the droplet generator comprises more than 1,000 outlets.

8. The control system of any one of the previous claims, wherein in use, the control system is configured to electrically charge the droplets, optionally, further comprising at least one electrically charged device, wherein the control system is configured to pass the droplets through the at least one electrically charged device to alter the electrical charge of the droplets, further optionally wherein the control system comprises multiple electrically charged devices which are arranged such that droplets being charged pass successively through each of the electrically charged devices.

9. The control system of any one of the previous claims, wherein the liquid comprises at least one of the following:
a) at least one microorganism;
b) at least one bacteria, virus and/or fungus;
c) at least one pathogen;
d) ozone;
e) at least one nutrient.

10. The control system of any one of the previous claims, wherein the space is substantially enclosed.

11. The control system of any one of the previous claims, wherein the space is in or at least part of one of the following:
a) A gas turbine;
b) A food preparation, food storage and/or food selling area;
c) A printing area;
d) A textile production area;
e) An area for preparation and/or storage of wooden objects;
f) An office environment;
g) A data centre;
h) A space housing artefacts made from natural materials;
i) A car factory;
j) A test chamber;
k) An area used to cultivate and/or grow plants using hydroponics or geoponics, and/or an area used to sell plants; and
l) An area used to propagate at least one pathogen or fungus.

12. An apparatus comprising the control system of any one of claims 1 to 9, wherein the apparatus comprises the space, the space being substantially enclosed within the apparatus.

13. The apparatus of claim 12, wherein the apparatus comprises at least one removable unit which is positioned within the space, and/or wherein the apparatus is configured to propagate at least one pathogen or fungus.

14. A method of supplying droplets to a space to control the humidity of the space, the method comprising generating droplets using a droplet generator comprising at least one outlet, wherein the generation step comprises generating one droplet of liquid at a time from each at least one outlet, and controlling the generation of the droplets using a control unit to control humidity in the space.

15. The method of supplying droplets according to claim 14 using the control system of any one of claims 1 to 11 or the apparatus of any one of claims 12-13.
